# FASCICULE DE BREVET EUROPEEN

(11) **EP 0 375 535 B1**
(45) Date de publication et mention de la délivrance du brevet: **24.02.1993**
(21) Numéro de dépôt: 89403535.1
(22) Date de dépôt: 19.12.1989
(51) Int. Cl.: C03B 23/035, C03B 23/023, C03B 19/10, C03B 21/00, C03B 23/03, C03B 29/04

(54) **Ligne de production de vitrages bombés**
Fertigungsstrasse für gebogene Glasscheiben
Production line for bent windshields

(30) Priorité: 21.12.1988 FR 8816894; 09.03.1989 FR 8903076; 09.03.1989 FR 8903078
(43) Date de publication de la demande: 27.06.1990
(60) Demande divisionnaire: 91117782.2
(73) Titulaire: SAINT-GOBAIN VITRAGE INTERNATIONAL, 92400 Courbevoie (FR)
(72) Inventeur: Boutier, Philippe, B-1410 Waterloo (BE); Petitcollin, Jean-Marc, F-60150 Thourotte (FR); Mathivat, Denis, F-60150 Thourotte (FR); Machura, Christophe, F-60150 Chevincourt/Thourotte (FR); Plebany, Dany-Ange, F-60150 Thourotte (FR)
(74) Mandataire: Menes, Catherine

(56) Documents cités:
- EP-A- 0 262 046
- EP-A- 0 290 346
- FR-A- 1 585 342
- FR-A- 2 085 464
- SU-A- 477 953
- US-A- 3 407 053
- US-A- 4 297 118
- US-A- 4 539 031
- US-A- 4 767 437

## Description

L'invention se rapporte aux techniques de production de vitrages bombés destinés notamment aux véhicules automobiles, techniques selon lesquelles chaque feuille de verre est, dans un premier temps, réchauffée au-delà de sa température de déformation, conduite dans une station de bombage située dans le prolongement du four et où est maintenue la température élevée du verre puis, après bombage, est transférée dans une station de refroidissement par exemple une station de trempe thermique.

Pour l'obtention de vitrages automobiles notamment de custodes, de vitres latérales, de lunettes arrières ou encore de pare-brise, il est nécessaire de mettre en forme une feuille de verre plane, découpée aux dimensions du vitrage puis de procéder au feuilletage ou plus fréquemment à la trempe du vitrage bombé afin de conférer une plus grande sécurité aux passagers en cas de bris du vitrage.

Il est connu de nombreux procédés de bombage dits horizontaux dans lesquels la feuille de verre est échauffée au-delà de son point de ramollissement (500-700 C) dans un four électrique qu'elle traverse convoyée par exemple par un lit de rouleaux moteurs. Le four de réchauffage se prolonge par une station de bombage où le verre est formé par des outils de bombage spécifiques et par exemple dans laquelle la feuille de verre est soulevée au-dessus du convoyeur, appliquée contre une forme de bombage puis enfin recueillie par un chariot portant un anneau profilé d'une manière correspondant à la forme définitive du vitrage bombé. Ensuite, le chariot évacue la feuille de verre par exemple vers un dispositif de trempe ou un autre dispositif de refroidissement.

Dans d'autres cas, presque exclusivement réservés à la production de vitrages feuilletés, la ou la paire de feuilles de verre est déposée à l'entrée du four sur une forme de bombage sur laquelle elle est directement échauffée pour un bombage dit par effondrement.

Sans détailler plus avant la technique de formage utilisée, il faut noter que plus la précision requise est grande, et plus la forme est complexe, plus le formage est lent. Opérer trop rapidement c'est éventuellement créer momentanément des contraintes supérieures à la résistance du verre et donc risquer sa casse. Par ailleurs lorsque l'étape de refroidissement consiste en une trempe thermique par exemple par soufflage d'air froid, il est essentiel que le vitrage entre le plus chaud possible dans la station de trempe.

Pour ces raisons notamment, la demanderesse a choisi ici de ne s'intéresser qu'aux procédés de formage selon lesquels la température du verre reste pratiquement constante pendant toute l'opération de bombage. Température constante ne signifie pas absence totale d'échanges thermiques avec la feuille de verre, les vitesses de défilement des feuilles de verre ne permettent d'ailleurs pas de garantir systématiquement un parfait équilibre thermique (et d'ailleurs celui-ci peut ne pas être souhaité, une surchauffe locale favorisant en ces points le pliage par exemple). Par contre, ces échanges thermiques restent d'une amplitude extrêmement faible dans la mesure où on choisit d'opérer le formage dans une enceinte chaude dont la température est voisine de celle du verre - et non à l'air libre où le verre initialement à environ 650 C subirait un refroidissement très important préjudiciable à une bonne qualité du formage et surtout de la trempe.

Des considérations ci-dessus, il est clair qu'il faut absolument éviter les variations brutales et incontrôlées de températures dans la station de bombage. Or s'il est relativement facile d'isoler thermiquement une enceinte fermée, il en est tout autrement d'une station de bombage qui comporte obligatoirement deux entrées-sorties (pour l'introduction et le retrait des feuilles de verre et/ou des cadres montés sur chariot transportant le verre bombé) et des fuites latérales par le convoyeur d'amenée des feuilles de verre depuis le four le plus souvent constitué par des rouleaux dont les pignons engrènent sur des chaînes disposées hors de l'enceinte chaude afin de simplifier les réglages et surtout d'obtenir des durées de vie raisonnables pour les moteurs d'entraînement de ces rouleaux dont on sait qu'il est pratiquement impossible de les faire fonctionner en continu et de façon satisfaisante à une température voisine de 650 C.

Côté entrée, c'est-à-dire côté four, il n'y a pas de possibilité de pénétration d'air froid étant donné que la station de bombage est à la même température que le four dont à la limite elle constitue l'élément de l'extrémité avale. Les fuites latérales peuvent par ailleurs être éliminées dans une large part grâce à un calfeutrage convenable. D'autre part, et dans la mesure où la ligne de production est implantée dans un bâtiment non sujet à des courants d'air, l'apport d'air froid qui s'en suit est pratiquement constant et peut donc être compensé par un chauffage approprié. Par contre, il en est tout autrement pour ce qui concerne la sortie de la station de bombage.

En effet, l'ouverture doit être suffisamment large pour laisser passer une feuille de verre bombée, soit dans certains cas une hauteur de plus de 20 centimètres, pour une largeur d'environ 1 m 50 si on prend l'exemple d'une lunette arrière. Sauf à accepter une consommation d'énergie exorbitante, il est totalement exclu de laisser de façon permanente une ouverture d'une telle dimension. Et même à supposer que le coût énergétique ne soit pas un problème, on ne réglerait pas pour autant le problème particulier de l'entrée d'air froid consécutive au soufflage d'air froid pour la trempe de sorte qu'il est pratiquement impossible de créer des conditions relativement isothermes.

De fait, toutes les stations "chaudes" de bombage sont équipées d'une porte de sortie avec des moyens d'ouverture et de fermeture rapide. Toutefois, chaque fois que cette porte est ouverte, on a une entrée très importante d'air froid. Dans une installation à cadence élevée, le moment où la porte s'ouvre pour la sortie d'une feuille de verre dont le formage vient d'être achevé peut correspondre à la trempe de la feuille de verre précédente et à l'arrivée dans la station de bombage de la feuille de verre suivante. Le courant d'air froid vient donc lécher les rouleaux et surtout refroidit la feuille de verre suivant ce qui lui est évidemment très dommageable.

Pour y remédier, il est connu de doubler la porte de la station de bombage par un rideau d'air chaud généré par des brûleurs placés dans la station de bombage. Un rideau d'air chaud descendant a l'inconvénient de rabattre l'air froid pénétrant dans la station vers le convoyeur et donc les feuilles de verre suivantes, tandis qu'un rideau d'air chaud ascendant doit être émis à une pression assez basse pour laquelle il ne peut se produire de soulèvement de la feuille de verre qui traverse le rideau d'air chaud. Cette limitation systématique de la pression permise ne permet pas une compensation complète du courant d'air froid de sorte qu'il est nécessaire de prévoir une bonne synchronisation des mouvements des différentes feuilles de verre afin que l'arrivée de la feuille de verre soit suffisamment tardive pour qu'une homogénéisation de la température de la station de bombage se produise entre deux feuilles de verre.

Il est connu du brevet US-A-4 767 437 une installation de bombage comportant un four, une station de bombage pouvant, éventuellement, être munie de moyens de chauffage et un poste de trempe. La feuille de verre est transférée du four à la station de bombage par pressage par une plaque aspirée qui vient chercher la feuille de verre pour la déposer sur l'élément inférieur de la presse de bombage. Après l'opération de pressage, la feuille de verre retenue au contact de l'élément supérieur de la presse par aspiration est déposée sur un cadre de trempe. Pour accélérer le temps de cycle, ce cadre de trempe est introduit à un niveau supérieur au niveau d'amenée des feuilles de verre de sorte que la feuille de verre suivante peut être introduite dans la station de bombage avant que la feuille de verre en cours de traitement n'ait effectivement évacué cette station de bombage. Le problème des entrées d'air froid n'est pas traité dans le brevet précité.

L'invention a pour but un procédé de formage de feuilles de verre minimisant l'influence de la pénétration d'air froid dans la station de bombage et autorisant de la sorte des cadences plus élevées de production.

Le procédé selon l'invention conforme à la revendication 1 est tel que la feuille de verre pénètre dans la station de bombage selon une direction sensiblement horizontale à un étage dit inférieur et sort de cette station de bombage toujours selon une direction sensiblement horizontale mais à un étage dit supérieur, distinct de l'étage inférieur. Au sens de l'invention, le terme étage est utilisé pour indiquer que la station de bombage est vue comme une succession d'au moins deux chambres superposées - mais sans parois délimitant le plancher et le plafond, certains éléments se situant uniquement à un étage donné (par exemple le convoyeur acheminant les feuilles de verre depuis la sortie du four ou le cadre servant à évacuer les feuilles de verre après le formage) d'autres comme les feuilles de verre passant d'un étage à l'autre.

Dans une telle configuration, l'air froid pénètre très au-dessus du niveau d'entrée des feuilles de verre, à un niveau proche de la voûte de la station de bombage. Comme cette dernière est munie de résistances chauffantes destinées au maintien de la température adéquate, l'air froid est alors immédiatement réchauffé et ne perturbe pas de façon importante une feuille de verre convoyée au niveau inférieur.

Cet effet est encore renforcé si conformément à une variante préférée de l'invention la porte d'entrée est doublée d'un rideau d'air chaud obtenu au moyen de résistances chauffantes placées entre le niveau inférieur et le niveau supérieur. Ce rideau d'air chaud contribue bien sûr au réchauffage de l'air froid mais surtout dévie la trajectoire de cet air froid en le rabattant vers la voûte de la station de bombage et les résistances qui s'y trouvent de sorte que non seulement l'air froid est attiédi mais que de plus il est dilué dans la masse d'air chaud de la station de bombage.

Le principe d'entrée et de sortie à des niveaux différents peut être adapté à tous les procédés de formage en position horizontale selon lesquels la feuille de verre est acheminée sur un convoyeur jusqu'à venir se positionner précisément sous une forme de bombage et est alors soulevée par des forces de nature pneumatique ou mécanique jusqu'à venir en butée contre la forme de bombage dont elle épouse la courbure si nécessaire au moyen d'un pressage supplémentaire. Dans ces procédés - dont on trouvera des exemples détaillés dans les publications de brevet précitées WO 85/05100, FR 2 085 464, EP 3391 ou EP 169 770 - pour la prise en charge d'une feuille, la forme de bombage est très proche du convoyeur d'amenée des feuilles de verre et donc à ce moment là se trouve à l'étage inférieur. Une fois la feuille de verre appliquée contre la forme de bombage, il est connu selon l'art de relever légèrement la forme de bombage afin d'introduire un chariot portant un cadre servant à l'évacuation des feuilles de verre. Mais ce cadre évolue lui aussi à l'étage inférieur, à un niveau sensiblement identique à celui du convoyeur d'amenée. Par contre, en accord avec l'invention, on relève la forme de bombage d'une hauteur bien supérieure à la hauteur qui serait nécessaire seulement en vue de permettre l'introduction dudit chariot et c'est donc dans cette position haute,. à l'étage supérieur, que s'effectue l'évacuation. Il faut noter que la distance que parcourt la feuille de verre à partir du moment où elle est appliquée sur la forme de bombage est pratiquement indifférente du point de vue de la qualité du formage ce qui n'est évidemment pas le cas de la distance parcourue seule par la feuille de verre pour venir à la rencontre de la forme de bombage.

Un autre avantage indirect de l'invention est qu'elle autorise la disposition dans le même alignement du four, de la station de bombage et de la station de refroidissement notamment de trempe. En effet et sauf à prévoir un escamotage des caissons de trempe, il n'est pas possible d'évacuer une feuille de verre directement hors de la station de bombage (c'est-à-dire sans lui faire subir tout le cycle de formage) en passant par la sortie prévue pour les vitrages correctement formés, ceci du fait que les vitrages de formes complexes doivent être trempés dans des caissons de soufflage de trempe en forme dans lesquels ne peut pénétrer une feuille de verre plan. Lorsque le convoyeur d'amenée est à un étage différent de l'étage de sortie, on peut par contre le prolonger par un dispositif d'évacuation et de casse des volumes à évacuer directement. Cette évacuation se fait par exemple par un procédé selon lequel les feuilles de verre sont échauffées dans un four, acheminées en position horizontale dans une station de bombage où elles doivent être prises en charge par des outils de bombage puis transportées dans une station de refroidissement notamment de trempe, les volumes défectueux étant évacués à l'extrémité de la station de bombage, et dans ce but sont fissurés par pulvérisation d'un fluide froid puis broyés.

La pulvérisation du fluide froid - par exemple de l'eau - a lieu de préférence alors que les feuilles de verre sont en mouvement sur un convoyeur d'évacuation, immédiatement avant d'être broyées. De cette façon, même les volumes de grandes dimensions peuvent être réduits en fins morceaux sur une longueur très courte qui n'excède pas par exemple 300 mm. Ce très faible encombrement permet de loger facilement le système d'évacuation selon l'invention entre une station de trempe et une station de bombage disposées dans l'alignement du four de réchauffage des feuilles de verre.

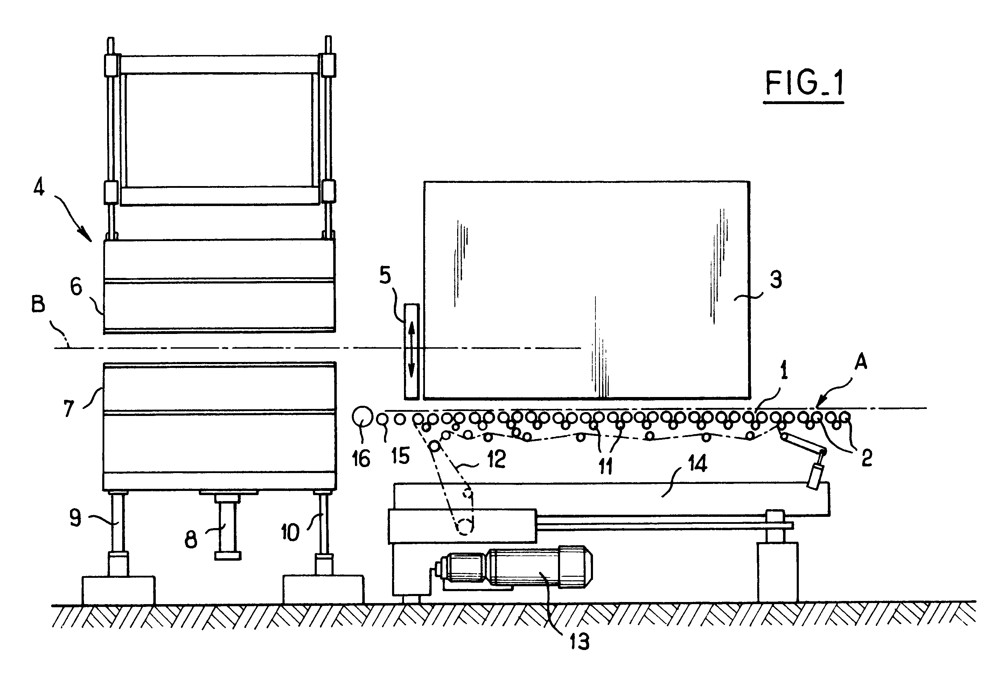

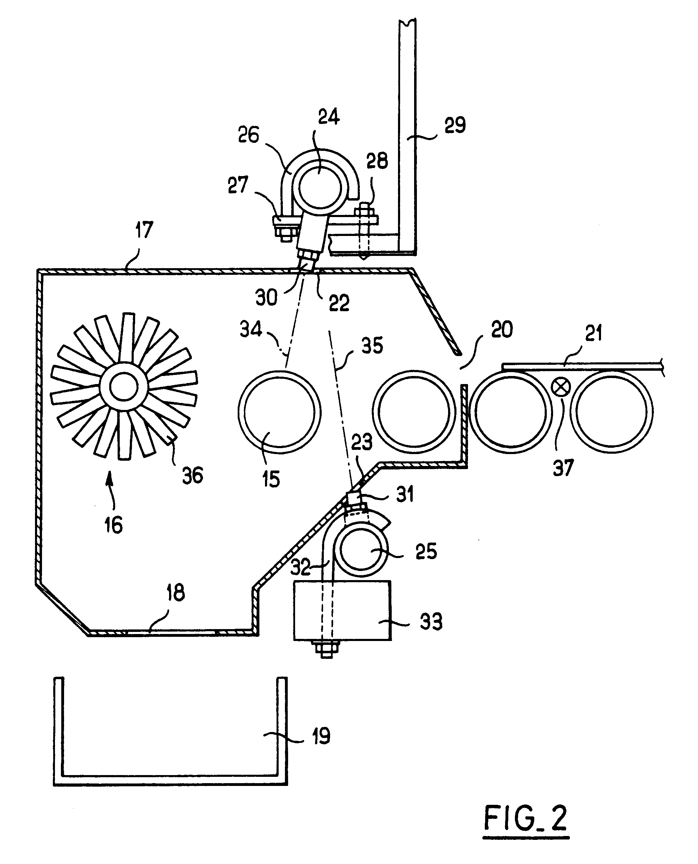

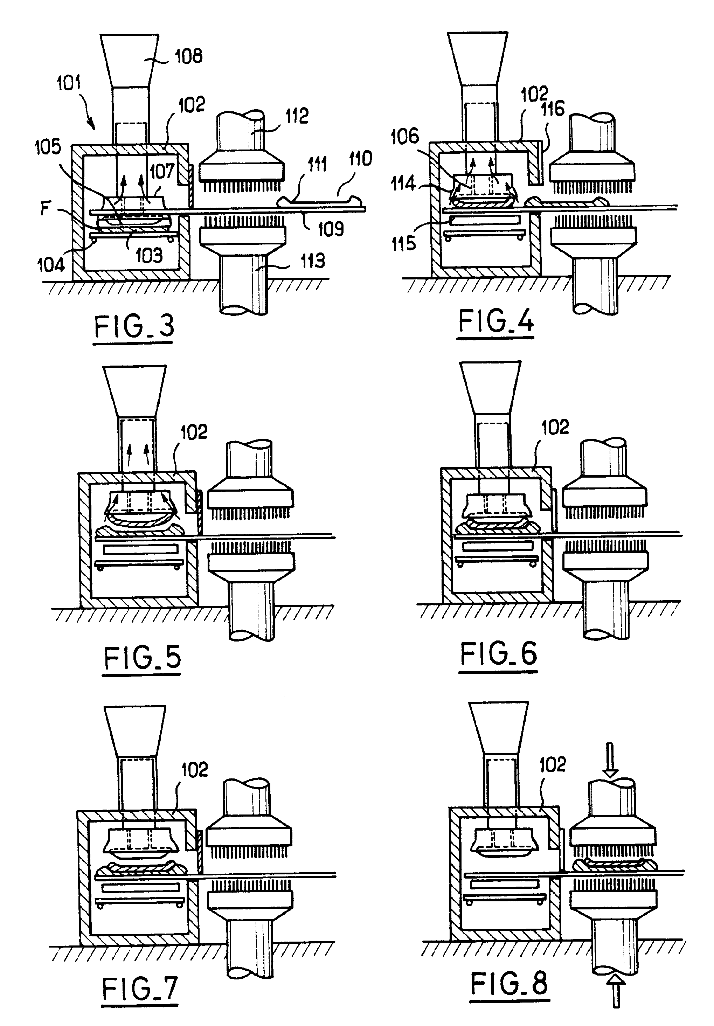

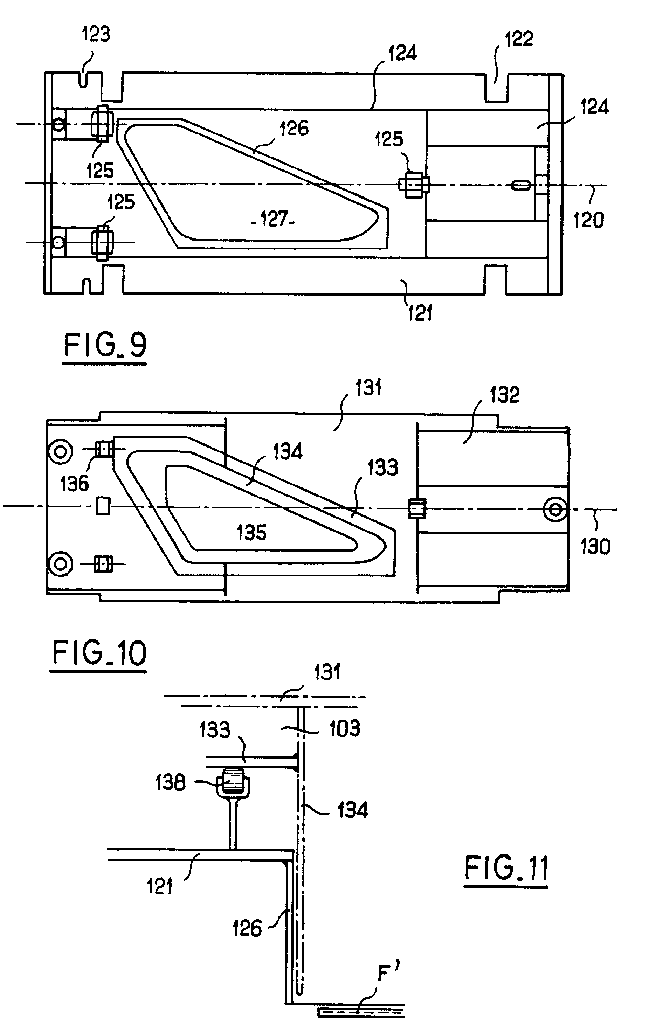

D'autres détails et caractéristiques avantageuses de l'invention sont décrits ci-après en référence aux dessins annexés qui représentent :
. **figure 1** : un schéma d'implantation d'une installation de bombage-trempe en ligne équipée d'un système d'évacuation des volumes défectueux selon l'invention,
. **figure 2** : un agrandissement du système d'évacuation des volumes défectueux selon l'invention,
. **figures 3 à 8** : les positions relatives des éléments principaux nécessaires pour la mise en oeuvre de procédé selon la revendication , au cours des étapes successives du traitement d'une feuille de verre,
. **figure 9** ; une vue schématique de dessous d'un conduit vertical, visible aux figures 3 à 8,
. **figure 10** : une vue schématique de dessous de la jupe mobile, visible aux figures 3 à 8,
. **figure 11** : une vue de côté du conduit vertical selon la figure figure 9 et de la jupe mobile selon la figure 10 en position basse.

L'installation de bombage-trempe schématisée à la figure 1 comporte un four pour le réchauffement une à une des feuilles de verre et ici non représenté. Les feuilles de verre sont acheminées au travers du four par un convoyeur 1 par exemple à rouleaux 2 dont le niveau de référence est montré par la ligne discontinue A. A la suite du four, les feuilles de verre échauffées à leur température de trempe et de bombage pénètrent dans la station de bombage 3. Cette station de bombage 3 comporte par exemple un ensemble porte outillage muni d'un système de relevage. Cet outillage est par exemple constitué par une forme de bombage supérieure entourée d'un caisson de dépression connecté à un dispositif approprié d'aspiration, ladite forme de bombage étant relevée et abaissée au cours d'un cycle de bombage par exemple au moyen de chaînes fixées sur l'ensemble porte outillage. Des exemples d'outils de bombage et de procédés de bombage utilisant de tels procédés sont par exemple décrits dans les demandes de brevets EP 240 418 et EP 241 355.

Un cadre par exemple de trempe recueille les feuilles de verre après leur bombage. Le cadre se déplace selon un niveau B bien supérieur au niveau A qui est le niveau de de pénétration des feuilles de verre dans la station de bombage 3. On voit donc que cette installation comporte deux étages distincts. Une fois déposée sur le cadre de trempe la feuille de verre est conduite à la station de trempe 4 après ouverture de la porte 5.

Cette station de trempe 4 est constituée de deux caissons de soufflage 6 et 7, montés sur un vérin 8 et guider par des coulisses 9,10 de façon à écarter les caissons pour tout entretien. Des conduites ici non représentées sont prévues pour l'alimentation en gaz de soufflage. Le niveau moyen de verre dans la station de trempe 4 est le niveau B ; l'expression "niveau moyen" rappelle que la feuille de verre est alors bombée selon une forme plus ou moins complexe et qu'en fait les deux caissons de soufflage ont une forme conforme à la surface de la feuille de verre bombée.

Si on revient maintenant à la station de bombage 3, on note qu'elle comporte sous l'ensemble porte outillage un convoyeur 1, prolongement du convoyeur d'acheminement au travers du four. Ce convoyeur est constitué par des rouleaux 2 posés sur des galets 11 et entraînés par des chaînes 12 entraînées par le moteur 13, l'ensemble étant soutenu par une poutre 14. Tous ces éléments bien connus de l'homme de l'art n'ont été schématisés ici que de manière à donner une idée de l'encombrement des différents organes et de la difficulté qu'il en résulte pour l'implantation d'un dispositif d'évacuation des volumes défectueux. Pour éviter un certain refroidissement du verre qui diminuerait l'efficacité du soufflage de trempe, la station de trempe doit être placée aussi proche que possible de la station de bombage. De ce fait, l'espace disponible à l'extrémité aval 15 du convoyeur 1 est particulièrement réduit et ne permet notamment pas d'y faire tomber tels quels les volumes défectueux. C'est pourquoi, on dote l'installation d'un système d'évacuation que l'on a simplement schématisé ici par le rouleau concasseur 16 et qui est représenté de façon plus détaillée à la figure 2.

Sur cette figure 2, on retrouve l'extrémité avale du convoyeur 1 avec ces 4 derniers rouleaux dont le rouleau extrême 15, ici des rouleaux creux en silice. Le système d'évacuation est entouré d'un carter 17 dont le fond est pourvu d'une trappe 18 pour l'évacuation vers une fosse à calcin 19. Ce carter 17 comporte simplement une ouverture 20 pour l'entrée d'un volume défectueux 21 acheminé par le convoyeur 1 et deux jours 22, 23. Face à ces jours 22, 23 sont montées des rampes de pulvérisation 24 et 25 s'étendant sur toute la largeur du convoyeur 1. La rampe supérieure 24 est fixée par une patte de fixation 26 à une plaque support 27 montée grâce aux boulons 28 sur un appendice de la paroi latérale 29 de la station de bombage. La rampe 24 est munie de buses 30 pour la pulvérisation d'un fluide froid par exemple de l'eau. De façon similaire, la rampe inférieure 25, munie de buses de pulvérisation 31 est fixée par une patte de fixation 32 à un support 33. Ces deux rampes sont équipées de canalisations d'alimentation en eau ici non représentées. Elles émettent de façon permanente des jets d'eau pulvérisée 34, 35. Deux rampes sont ici utilisées mais on peut éventuellement faire fonctionner le système d'évacuation avec une seule rampe.

Lorsque le volume défectueux à sa température de bombage passe entre les jets 34, 35, il est entièrement fissuré du fait du choc thermique extrêmement intense. Toutefois, les morceaux de verre restent positionnés les uns à côté des autres à la façon des éléments d'un puzzle reconstitué. C'est pourquoi le dispositif d'évacuation doit être complété par un dispositif de broyage ici constitué d'un rouleau concasseur 16 muni de dents 36 et mû en rotation par un dispositif ici non représenté. Au contact des dents 36, le verre fissuré éclate en multiples fragments qui retombent dans la fosse 19 en passant par la trappe 18.

Dans une variante préférée, on ne prévoit pas de fosse à calcin sous le dispositif d'évacuation mais le calcin est évacué directement (et avec l'eau pulvérisée) par un tapis vibreur incliné . Ce tapis vibreur incliné - ou tout autre dispositif équivalent - supprime toute nécessité d'arrêt pour vidange.

Le carter 17 occupe une longueur de ligne très faible, de préférence inférieure à 300 mm, de sorte que cet ensemble peut sans difficulté être logé dans l'espace disponible entre les stations de bombage et de trempe. Par ailleurs comme l'ensemble d'évacuation est protégé par un carter, la pulvérisation d'eau peut se faire de façon permanente dans une installation à deux niveaux telle que représentée à la figure 1, sans risquer de perturber le traitement des volumes "normaux".

Si on ne souhaite pas faire fonctionner de façon permanente le dispositif d'évacuation, par exemple la période de réglage passée, on équipe la ligne d'un détecteur 37 indiquant le cas échéant la présence d'un volume défectueux à proximité de l'extrémité avale 15. Après une éventuelle temporisation, le détecteur 37 sert alors à commander une ou plusieurs des opérations telles la pulvérisation, la rotation du rouleau concasseur, la mise en marche du tapis vibreur.

L'invention a également pour objet un procédé de bombage caractérisé par l'utilisation d'un caisson d'aspiration constitué par deux éléments mobiles l'un par rapport à l'autre, un élément supérieur en jupe portant la forme supérieure de bombage de sorte qu'un chariot de réception du verre puisse venir s'intercaler entre les deux éléments lorsque la forme supérieure de bombage est en position haute. Nous allons maintenant décrire les différentes étapes du procédé selon l'invention sont schématisées aux figures 3 à 9. Dans un four non représenté et dont l'axe serait perpendiculaire au plan de la feuille de dessin, les feuilles de verre sont échauffées une à une en étant convoyée horizontalement sur un lit de rouleaux moteurs. A la suite du four est prévue une cellule de bombage 101 entourée de parois réfractaires 102 afin de maintenir dans cette cellule de bombage une température voisine de celle du verre chauffé à 500-700 C. La feuille de verre véhiculée sur des rouleaux 103 posés sur des paliers 104 vient s'immobiliser sous la forme de bombage supérieure 105 qui est montée par des tirants 106 sur le caisson d'aspiration 107. Le caisson d'aspiration 107 est connecté à une chambre sous dépression 108, de sorte qu'un courant d'air ascendant est créé au voisinage de la périphérie de forme supérieure 105.

Perpendiculairement à l'axe du four sont prévus des rails 109 sur lesquels roule un chariot 110 portant un squelette 111. Ces rails passent entre deux caissons 112, 113 de soufflage de trempe, et contrairement à l'art sont situés à un niveau nettement plus élevé que celui du convoyeur 113.

La feuille de verre F est immobilisée et correctement positionnée sous la forme supérieure de bombage, cette dernière est descendue en position basse (figure 3), à proximité de la surface de la feuille F. Lorsque l'on souhaite fabriquer un vitrage de forme particulièrement complexe, les dimensions de la feuille de verre plane sont nettement plus grandes que celles de la projection sur un plan de la feuille de verre après bombage. Aussi conformément à l'invention, le caisson d'aspiration 107 est constitué de deux éléments mobiles l'un par rapport à l'autre : un conduit vertical 115 par exemple fixe et une jupe 114 solidaire de la forme supérieure de bombage 105. Ce conduit vertical 115 est à section droite. Son contour approche le contour de la feuille de verre F à l'état plan, en débordant légèrement afin de permettre l'aspiration périphérique de la feuille de verre. Le contour de la jupe épouse lui la trajectoire de la feuille de verre en cours de conformation. Celle-ci s'amenuise donc et on a de préférence une paroi courbe. Comme la jupe 114 n'intervient qu'indirectement pendant la première phase de l'opération, c'est-à-dire la phase de l'envol pendant laquelle l'aspiration doit être au mieux canalisée, elle peut être très courte avec une forme supérieure de bombage 105 qui déborde largement par le bas.

Dès que le verre atteint la forme de bombage (figure 4), la forme d'aspiration est de préférence un peu diminuée afin d'éviter tout risque de détérioration du verre. A ce moment, la forme supérieure 105 - et donc la jupe 114 -sont remontées en position supérieure. Le chariot 110 est alors amené en direction de la cellule de bombage 101, après ouverture de la porte 116 qui sépare la cellule de bombage 101 de la cellule de trempe.

Pendant ce temps, la feuille de verre épouse progressivement les contours de la forme de bombage. Comme il est particulièrement visible à la figure 5, cette opération n'est pas masquée par les contours du caisson 107 du fait que la partie supérieure de celui-ci est simplement constituée par la jupe 114 qui très courte forme simplement des défecteurs autour de la forme supérieure 105 afin de canaliser les courants d'aspiration. La jupe 114 et la forme 105 associées sont remontées suffisamment pour insérer le chariot 110, même si le squelette 111 est de forme particulièrement complexe. La forme supérieure est alors redescendue (figure 6) afin de déposer la feuille de verre F′ sur le squelette 111. La dépose peut être éventuellement complétée par un pressage. Pour faciliter ce dernier, il est d'ailleurs préférable de prévoir un positionnement de la forme de pressage commandé par des vérins par exemple hydrauliques, commandant les mouvements de la jupe 114, que ce soit dans le sens ascendant ou le sens descendant. Ces vérins permettent d'assurer une pression constante sans tenir compte du poids de la forme supérieure et de la jupe. La forme 105 est à nouveau relevée pour libérer le squelette (figure 7) qui conduit la feuille F entre les caissons de soufflage où on procède à l'opération de trempe (figure 8).

Pour la mise en oeuvre du procédé ci-dessus décrit, on peut avantageusement utiliser un caisson constitué des éléments représentés aux figures 9 et 10.

La figure 9 concerne la partie inférieure du caisson encore appelée conduit vertical. L'axe du four est schématisé par la ligne discontinue 120. Cette partie du caisson est essentiellement constituée par une plaque 121 découpée dans une tôle en comportant des encoches 122, 123 pour sa fixation sur des moyens de support appropriés par exemple du type tringle de sorte que la plaque puisse coulisser et être échangée en un laps de temps très court. Pour éviter toute déformation malgré la température de la cellule et les grandes dimensions des vitrages, cette plaque est munie de raidisseurs 124. Sur cette plaque 121, par des moyens de fixations appropriés 125, on fixe le conduit vertical 126 dont l'ouverture 127 correspond - avec une légère surcote - aux dimensions du vitrage à plat.

Cette partie du caisson peut être montée fixe ou déplaçable verticalement selon une petite course, d'une hauteur suffisante pour permettre le dégagement d'une feuille de verre improprement aspirée.

La partie supérieure du caisson ou jupe - toujours mobile - est schématisée à la figure 10. L'axe du four a été ici schématisé par la ligne discontinue 130. Sur une plaque 131 de préférence en tôle munie d'éléments de renfort 132 est fixée par des goussets 137 visibles à la figure 11, une plaque 133.

Ces deux plaques supportent la jupe 134. La fixation est obtenue par des moyens 136. L'ouverture 135 correspond à l'encombrement du vitrage après formage.

Comme schématisé à la figure 11 où sont représentés le conduit vertical 126 et la jupe 134 en position d'aspiration d'une feuille de verre F, la course de la jupe 134 est limitée par un coussinet en matière plastique 138 sur lequel vient buter la plaque 133 lorsque la jupe est en position basse.

Le caisson vertical 126 - à section droite constante - sert de préférence de supports à des moyens de centrage par exemple des poussoirs commandés par des vérins, poussoirs qui permettent de positionner la feuille F très exactement au centre du conduit vertical 126. Pendant ce positionnement, une faible dépression et/ou un léger soufflage vertical par un courant d'air chaud est créé dans le caisson. Ceci afin de soulager partiellement les rouleaux du convoyeur du poids de la feuille F qui ne risque pas ainsi d'être marquée. Notons que même lorsqu'il est mobile en hauteur, le conduit vertical est en position à proximité du plan des rouleaux du convoyeur pendant un temps beaucoup plus long que celui disponible pour la forme supérieure de bombage et qu'il est ainsi possible de procéder à un positionnement beaucoup plus précis.

## Revendications

1. Procédé de formage de feuilles de verre selon lequel les feuilles de verre sont réchauffées, amenées en position horizontale dans une station de bombage, chauffées notamment au moyen de résistances montées sur sa voute et où elles sont prises en charge par des outils de bombage puis transportées dans une station de refroidissement, notamment de trempe, l'entrée dans la station de bombage et la sortie des feuilles de verre s'effectuant à des étages de hauteurs différentes, **caractérisé en ce que** la feuille de verre pénètre dans la station de bombage à l'étage dit inférieur puis en sort à l'étage dit supérieur pour que l'air froid provenant de la sortie soit dirigé vers les résistances chauffantes de la voûte.

2. Procédé selon la revendication 1, **caractérisé en ce que** l'on opère un soufflage d'air chaud ascendant à la sortie des feuilles de verre bombées.

3. Procédé selon la revendication 2, **caractérisé en ce que** le chauffage de l'air est obtenu par une résistance électrique.

## Patentansprüche

1. Verfahren zum Formen von Glasscheiben, bei dem die Glasscheiben erwärmt, in horizontaler Lage einer Biegestation zugeführt und insbesondere mittels an der Decke der Station angeordneten Heizwiderständen erwärmt werden, wo sie von Biegewerkzeugen aufgenommen und dann in eine Abkühlstation, insbesondere zum Harten, geführt werden, wobei der Eintritt in die Biegestation und der Austritt der Glasscheiben auf Etagen mit unterschiedlichen Höhen stattfindet, **dadurch** **gekennzeichnet**, **daß** die Glasscheibe in die Biegestation auf der unteren Etage eintritt und auf der oberen Etage austritt, so daß die vom Ausgang kommende kalte Luft zu den Heizwiderständen an der Decke geleitet wird.

2. Verfahren nach Anspruch 1, **dadurch** **gekennzeichnet**, **daß** die gebogenen Glasscheiben am Ausgang mit aufsteigender heißer Luft beblasen werden.

3. Verfahren nach Anspruch 2, **dadurch** **gekennzeichnet**, **daß** die Erwärmung der Luft durch einen elektrischen Heizwiderstand erreicht wird.

## Claims

1. Process for shaping glass sheets, according to which the glass sheets are heated, brought in a horizontal position into a curving station, heated notably by resistors mounted beneath its roof and where they are taken over by curving tools and then conveyed into a cooling station, notably toughening station, the entry into the curving station and the discharge of the glass sheets being carried out at different levels, characterized in that the glass sheet enters the curving station at the level known as a lower level and then leaves it at the level known as a higher level, so that the cold air coming from the outlet is directed towards the heating resistors of the roof.

2. Process according to Claim 1, characterized in that a blowing of ascending hot air is carried out at the exit for the curved glass sheets.

3. Process according to Claim 2, characterized in that the heating of the air is achieved by an electrical resistor.
